(19) Europäisches Patentamt
European Patent Office
Office européen des brevets

(11) EP 3 107 018 A2

(12) **EUROPEAN PATENT APPLICATION**

(43) Date of publication:
**21.12.2016 Bulletin 2016/51**

(51) Int Cl.:
***G06F 17/50** (2006.01)*

(21) Application number: **16175151.6**

(22) Date of filing: **17.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.06.2015 GB 201510861**

(71) Applicant: **Penso Holdings Ltd.**
**Coventry, West Midlands CV3 4FX (GB)**

(72) Inventor: **Arnold, Mark**
**Coventry, West Midlands CV3 4FX (GB)**

(74) Representative: **Tranter, Andrew David**
**Barker Brettell LLP**
**100 Hagley Road**
**Edgbaston**
**Birmingham B16 8QQ (GB)**

(54) **METHOD FOR USE IN THE ANALYSIS OF A COMPOSITE COMPONENT AND A DESIGN TOOL**

(57) A design tool for use in processing a finite element analysis model of a fibre reinforced composite component, the tool comprises receiving means for receiving a finite element model of the composite component, the model representing at least one laminate of the component comprising at least one ply of fibre reinforced composite material as a set of shell elements, whereby for each shell element the model includes a fibre orientation angle value indicative of the angle of at least one fibre passing through the element, and

Modifying means for modifying the model to produce an updated model in which the fibre orientation angle value for each element is modified by at least one of a spatially constant amount and a spatially varying amount generated according to a set of predefined parameters, by an iterative process in which the modification for an element is made with reference to the modified fibre orientation angle value for at least one adjacent element.

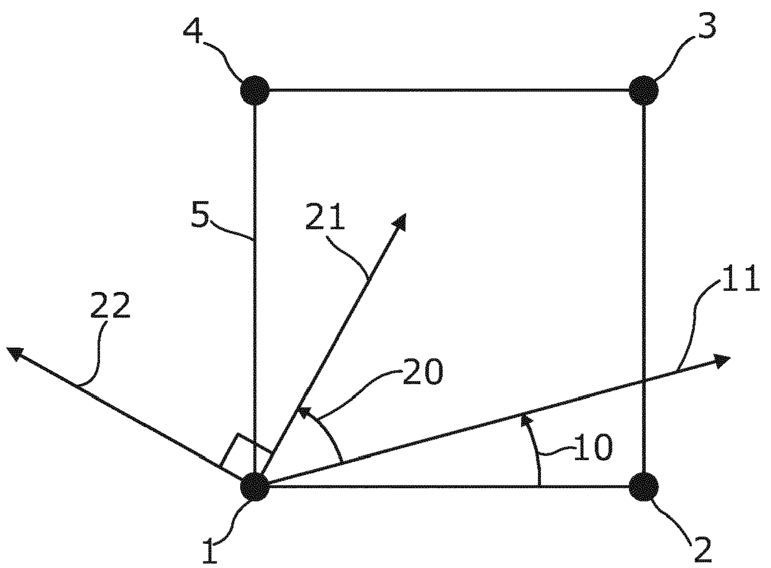


Figure 1

EP 3 107 018 A2

## Description

This invention relates to a design tool for fibre-reinforced composite components, and to a method of processing a model of a fibre-reinforced composite component.

By a fibre-reinforced composite component we mean a component made up of a material that comprises a continuous matrix, which is typically a thermoset or thermoplastic polymer material, and reinforcement, which is typically a carbon or glass fibre. This reinforcement can be classified as either a continuous fibre or a discontinuous (short) fibre. Within the scope of this patent application the reinforcement fibres may be unidirectional in which case they all run ideally in the same direction in a ply, or bidirectional in which case the fibres run ideally in two directions that are orthogonal to each other.

Imperfections in fibre orientation can be introduced at a number of stages in the manufacturing process, depending upon the individual processes employed and the corresponding operating tolerances. For hot compression moulding and more traditional autoclave manufacturing processes, the discrete stages typically involve weaving of the individual dry fibres into a fabric sheet, impregnating this dry fabric sheet with the uncured polymer matrix to form a pre-impregnated (prepreg) sheet, cutting the individual flat ply patterns from this prepreg sheet, positioning each of these flat plies within the preform tool in the desired location and orientation, draping these plies over the geometric features of the preform tool to form the laminate, and finally curing this uncured laminate within the mould tool by application of temperature and pressure. The stages used in Resin Transfer Moulding (RTM) differ slightly to hot compression moulding in that dry fabrics are laminated into the preform tool and this laminate is transferred to the mould tool for injection of the matrix material, however similar imperfections in fibre orientation could be introduced.

An essential part of the design process for a composite component that is to be used in a safety critical application, or indeed any composite component where early failure would not be acceptable, is to ensure the structural strength or stiffness of the component meets with expectations. Failure could be characterized in this case as material fracture or excessive deflection. Fibre-reinforced polymer composite shell structures are engineered to meet these structural performance requirements at minimum mass by laminating one or more plies (layers) of material into a preform tool such that the fibres are deliberately oriented along the primary loading directions. Ideally this will also take into account any variation that may be incorporated during manufacture, which might lead to a reduction in the structural performance of the whole or part of the component compared with the expected behaviour. Because composite components rely on the orientation of the fibres in the plies to achieve the expected strength and stiffness, variations in the orientation of the fibres are known to be key source of variation in structural performance.

Previous design tools and methods have attempted to account for variations in structural performance due to manufacturing imperfections in fibre orientation by assuming that the magnitude of this fibre orientation imperfection (or error) measured from the ideal orientation is uniform (constant) over the surface area of each ply. In order to account for these variations, composite components are routinely modelled within commercially available finite element analysis (FEA) software. This software typically requires the structure to be represented as an FEA model, with each component comprising multiple thin shell elements referencing one or more laminated composite shell section properties. These laminate properties specify the thickness, material properties, fibre orientation angle and shape of each ply within a single component, the shape being defined as a subset of all elements comprising the laminate. Depending upon the FEA software and modelling approach used, the fibre orientation angle for all elements encompassed by a single ply can either be specified individually for each element, or else once on a single laminated composite shell section property referenced by all these elements.

The material properties of each ply within such a laminate are defined at macroscopic level assuming a plane stress orthotropic linear elastic stress-strain relationship. This behaviour assumes different material properties in two orthogonal in-plane directions, commonly termed the longitudinal direction and lateral direction, but ignores through thickness effects. This material model can be used to represent fibre-reinforced composite plies incorporating unidirectional or bidirectional (fabric) reinforcement, with the longitudinal direction corresponding to the fibre (or warp fibre for bidirectional materials) and the lateral direction corresponding to the matrix (or weft fibre for bidirectional materials).

Applying this methodology during the design of a composite component or structure, it is possible to analyse a proposed design assuming no manufacturing imperfection in fibre orientation in order to determine the idealised (or nominal) strength and stiffness results. Next, a uniform error in fibre orientation can be introduced to each ply in order to quantify variability in structural performance from nominal due to this imperfection. Ideally, the orientation angle of each ply would be varied independently, since it is unlikely that the same error would occur at all plies simultaneously. This could be achieved using either Design of Experiments or Monte Carlo Simulation approaches, where the nominal model is analysed multiple times with different orientation errors applied to each ply. The variation in results obtained from these analyses could then be compared with structural performance targets to determine whether the design is robust to manufacturing imperfections.

This known design and testing model, whilst simplistic, is a useful design tool because it is not uncommon to lay up one or more plies with an angular error in fibre orientation. This may be an error introduced during the cutting stage of the plies, or when positioning these plies within the preform tool. However the applicant has appreciated that this known model, whilst a useful and industry recognised tool, has some limitations. An object of the present invention is to ameliorate some of these limitations by providing an enhanced and improved design method for composite components.

According to the present invention, there is provided A design tool for use in processing a finite element analysis model of a fibre reinforced composite component, the tool comprising

means for receiving a finite element model of the composite component, the model representing a laminate of the component comprising at least one ply of fibre reinforced composite material as a set of shell elements, whereby for each shell element the model includes a fibre orientation angle value indicative of the angle of at least one fibre passing through the element, and

means for modifying the model to produce an updated model in which the fibre orientation angle value for each element is modified by at least one of a spatially constant amount and a spatially varying amount generated according to a set of predefined parameters, by an iterative process in which the modification for an element is made with reference to the modified fibre orientation angle value for at least one adjacent element.

The tool may generate both of the constant and spatially varying amounts randomly or pseudo randomly.

The tool may be configured to generate the angle value for the elements by propagation from an initial seed element selected from the elements of the model.

The seed element may be construed as a point on the ply at which the randomly varying modification to the original model is zero such that only a constant fibre orientation error is applied at the seed element, which constant error may be zero. The constant error may, of course, be given a value which is randomly selected, this random value being applied across all of the elements.

The tool may include a means for applying a finite element analysis process to the modified model to determine the structural performance of the composite component.

The applicant has appreciated that in the real world, the fibre orientation of composite structures typically includes both constant and spatially varying manufacturing imperfections, or errors, which would be a function of parameters such as ply size and shape, drapeability of the prepreg material and geometry of the preform tool. The constant error term could be due to misalignment of either the prepreg sheet within the cutting machine or else the ply within the preform tool. The spatially varying error term could be due to fibre scissoring caused by manual manipulation of the flat ply patterns over the preform tool geometry, or else fibre distortion caused by flow of the matrix material within the mould tool.

The tool may include a user interface that enables a user to control the values of the predefined parameters used in the iterative process which may include defining a uniform or normal (Gaussian) continuous probability variation to represent the spatialluy constant fibre orientation error across the ply. This may enable the user to set the parameters or to modify an existing set of parameters stored by the tool in a memory. These parameters may define how the model determines what is a random variation .

In addition to the spatially constant and spatially random variations, other forms of spatial variation may be applied. For instance, the model may assume that there is a defined variation in angle spatially across the ply which is not constant and is overlaid with the constant and/or random variations. This variation may, for instance, take into account changes in orientation that are enforced when the material is bent around corners to form the desired shape. A flat sheet cannot, for instance, be pressed onto a highly irregular surface without introducing some changes in orientation, and these will be in addition to any constant error due to misalignment of the material or random errors due to deformity in the material or poor laying up of the material leading to rucking and stretching.

The tool may, for instance, add an additional spatially varying, random error term to each element representing error introduced during manufacture when the material is pressed. This addition error does not propagate across the material.

In another arrangement the tool may additionally or alternatively apply a scaling factor to the spatially varying amount that is dependent on local features of the design such as the local thickness, the distance to edge of a ply, etc. The applicant has appreciated that the errors vary depending on the local features especially when the design is being produced using a press. The pressure applied by the press causes some misalignment in the fibres from when they are laid up and placed in the press to when the design emerges from the press and has cured.

The scaling factor may be greater close to the edge of a ply compared with at the centre, and may be greater when the thickness of the material is greater. The scaling factor may vary from 0 to 100 percent.

The scaling factor may be applied only to the varying amounts, and not applied to the spatially constant amounts or to any random additional error term that is included.

The user interface of the design tool may include input means for receiving from a user the design parameters which defines the randomness of the relationship between the angle at one element and the angle at an adjacent element. This may comprise a user input device such as a keyboard, a mouse or a touch screen.

The present invention therefore provides a design tool that works in an iterative manner and enables the designer to introduce a spatially constant and/or randomly spatially varying fibre orientation errors to represent these manufacturing imperfections within laminated fibre-reinforced composite structures modelled using finite element analysis. Use of the tool requires no time consuming, manual definition of a large number of unique design variables corresponding to the fibre orientation angle error at each element of every ply within the laminate, as these variables are all generated automatically as the tool is used.

The user interface may be arranged to enable the user to set (enter of modify) the defined parameters used by the model including but not limited to defining a continuous probability distribution to represent the constant fibre orientation angle error over each ply of the laminate. Thus, as the iterative process is applied the tool will introduce a constant error across each fibre orientation angle value.

The tool may use the parameters to apply defined limits (either upper limits or lower limits or both) to the amount of angular fibre orientation angle variation spatially across the plies, and may also apply a set of rules governing the way in which the tool varies the angle spatially across the plies.

The tool may permit the user to set parameters that cause the tool, when applying the iterative process, to apply a chosen probability distribution such as a uniform distribution, where all values of the random variable occur with equal probability within upper and lower limits, or a normal (Gaussian) distribution, where random values occur with unequal probability based upon the standard deviation and mean.

The tool may include a means for applying to each ply within the composite laminate a unique user-defined global ply identifier so that continuity in fibre orientation angle across all elements within a ply is maintained during the process of modification.

The design tool may, following the setting of the defined parameters, determine the angle orientation value for each element in the at least one ply by combining the angle orientation value of an adjacent element with a randomly determined angular error, the randomly determined error being constrained by the defined parameters.

The tool may be arranged to automatically calculate the angle orientation values for every element by the iterative propagation from the value at a seed element.

The tool may propagate the values across the model by calculating values for each element in a ring of element around a seed element within a ply and subsequently repeating for the other rings in that ply in the model by selecting as a new seed an element in a previous ring, before repeating for the other plies.

By ring we mean all elements that immediately surround a seed element, or that immediately surround a smaller ring where the seed element is an element in a smaller ring. Rings are therefore concentric around other smaller rings. The rings may completely enclose a smaller ring although where interrupted by the edges of the ply they may only enclose a smaller ring up to the points where the smaller rings meet an edge of the ply.

The tool may include means for enabling a user to select the initial seed element, or alternatively the seed element within the at least one ply may be randomly selected by the tool or pseudo randomly selected.

The tool may be arranged to modify every ply in the model to produce the modified model.

The tool may be arranged to produce multiple modified models, each one including the random angular variations, and to analyse collectively the multiple models to determine the structural integrity of the component. The tool may employ a Monte Carlo processing method during this analysis.

According to a second aspect there is provided a method of processing a finite element analysis model of a composite component of the kind comprising at least one ply or ply of fibre reinforced composite material, the method comprising the steps of:

> receiving a finite element model of the composite component, the model representing a laminate of the component comprising at least one ply of fibre reinforced composite material as a set of shell elements, whereby for each shell element the model includes a fibre orientation angle value indicative of the angle of at least one fibre passing through the element,
>
> modifying the model to produce an updated model in which the fibre orientation angle value assigned to each shell is modified by a random amount according to a set of defined parameters by an interactive process in which the modification is made with reference to the modified fibre orientation angle value for at least one adjacent element by propagation from an initial seed element.

The method may further comprise applying a finite element analysis process to the modified model to determine the structural performance of the composite component.

The method may be applied numerous times to produce a plurality of modified models, each potentially different from the others due to the random spatial variations, and may apply a finite element analysis process to each modified model. This enables information about how the final product will perform in the real world when errors are introduced during manufacture that cause the fibres to deviate from an optimum orientation.

The method may comprise, after repeating the steps above multiple times, determining if the model has acceptable structural properties.

If it does not, the method may comprise modifying the model by changing at least one of the number, orientation, and location of the sheets, the plies, the type and tensile strength of the fibres in the plies, the local thickness of the model, the radius of any curves in the model, and the grade of the material used in the model (for instance increasing the number of plies and repeating the method steps to determine if the changed model has the required structural properties. This may be repeated as many times as needed. Further, wider ranging changes to the overall shape of the model may also be made if required.

The method may be used to reduce the weight of the part produced according to the model if it exceeds the structural strength/rigidity required, as part of a lightweighting design process.

The method may be applied to a ply of fibres with defined orientation, including unidirectional or bidirectional fibre sheets of material. In the latter case, we mean that the method may assume that at any shell in the model the fibres in the ply are orthogonal, hence only one fibre angle at each shell is needed to define the model. This is a reasonable and valid assumption for modelling most errors in angle that may be present during in a composite component with bidirectional fibres.

By referencing an adjacent element when modifying an angle the method does not require a user to define manually are error for every element, but instead may propagate errors for one or more seed elements using the defined parameters. This greatly reduces the amount of user input required to a level similar to that of a prior art simple technique in which only a uniform error is assumed whilst giving a far higher quality modelling of possible errors.

The method may comprise a step of receiving from a user the defined parameters or otherwise enabling a user to modify or place boundaries on the defined parameters. By this we mean setting boundaries on the amount of error between one element and the next, and the manner in which the errors are determined.

The parameters may include a constant offset angular error and/or a randomly varying error and/or other user defined spatially varying error. The former is generally due to the sheet being oriented incorrectly over the whole ply. The latter is generally useful to allow account to be taken of likely orientation changes as the sheet is deformed to follow contours in the finished model which may lead to the orientation having to deviate from the ideal orientation no matter how skilled the person laying up the sheets. The later may also be used to account for non-random spatially varying errors, which may be sinusoidal or follow other patterns.

The parameters may include a continuous probability distribution to represent the constant fibre orientation angle error over each ply of the laminate.

The tool may permit the user to set a uniform distribution, where all values of the random variable occur with equal probability within upper and lower limits, or a normal (Gaussian) distribution, where random values occur with unequal probability based upon the standard deviation and mean.

The method may comprise following setting of the parameters by the user the following steps:

(a) Select a first ply in the model and modify the angle value for each element in the ply;
(b) Select a further ply in the model and modify the angle value for each element in the ply; and
(c) Repeat step (b) until all plies have been selected and modified.

The method may include more than one laminate, each laminate being made up of one or more plies, and the method may therefore further comprise a process of automatically repeating the cycle of steps (a) to (c) for each laminate within the model until all laminates have been modified.

The method may further comprise, during modifying the angle values within a ply identified in steps (a) or (b) the sub steps of:

(d) Manually or randomly select an initial seed element from all elements within the current ply;
(e) Generate a random number to represent the constant fibre orientation angle error $E_c$ over the current ply using the corresponding probability distribution; and
(f) Modify the fibre orientation angle at the initial seed element from its original value $\theta$ to a new value $\theta_n$ by addition of the constant fibre orientation angle error $E_c$.

The method may further comprise defining angle values for each element in the ply following completion of step (f) for the seed, propagating outward from the initial seed element to adjacent elements in a series of rings until all such rings of elements have been modified.

The method may further comprise the following steps for each 'active' element within the current ring of elements (selected at step 109) until all these elements have been modified. :

(g) Identify all elements adjacent to the active element and having a previously modified fibre orientation angle;
(h) Randomly select one of these identified previously modified elements to be the new seed element for the active element, with a corresponding total angle error (as calculated during a previous loop);
(i) Calculate the distance $D_i$ between the centroid of the active element and the centroid of the seed element and generate a random number to represent the variable fibre orientation angle error gradient $\dot{E}_i$ at the active element using the corresponding probability distribution;
(j) Calculate the variable fibre orientation angle error $\dot{E}_i$ at the active element from the error gradient $\dot{E}_i$ and the distance between centroids $D_i$ and
(k) Calculate the total fibre orientation angle error $E$ at the active element at step 116 from the variable angle error $E_i$ and the seed element angle error $E_S$.

The method may finally comprise after step (k) modifying the fibre orientation angle at the active element from its original value θ to a new value $\theta_n$ by addition of the total angle error value *E*.

Once all laminates within the model have been modified, the method may comprise saving the modified FEA model, for instance by exporting the modified model to a text file or other readable format.

There will now be described, by way of example only, one embodiment of the present invention with reference to the accompanying drawings of which:

**Figure 1** shows a laminated composite shell element annotated with orientation angles for the material coordinate system and longitudinal/lateral fibre directions.

**Figure 2** shows a flowchart of the invented computational method for generating a spatially varying random fibre orientation error in a structure comprising laminated composite shell elements.

**Figure 3** shows an example of the invented computational method applied to a rectangular laminated composite plate.

**Figure 4** shows a representative laminated composite component that may be modelled by the tool and method of the present invention; and

**Figure 5** is a schematic of the hardware and software elements of the design tool.

The most common notation used by FEA software to define the fibre orientation of a single laminated composite shell element is shown in Figure 1. The location of nodal points 1 to 4 are defined by their three dimensional (XYZ) coordinates relative to a global or local Cartesian coordinate system. A shell element 5 is defined by connecting nodes 1 to 4 in the case of a quadrilateral shaped element, but by connecting only nodes 1 to 3 for a triangular shaped element. The orientation of the material coordinate system X axis 11 is defined at each element by a material coordinate system orientation angle 10 measured from element edge node 1 to 2. The orientation of the longitudinal direction 21 for each ply in the element is defined by a fibre orientation angle 20 measured from this material coordinate system X axis. The material coordinate system X axis and the longitudinal direction are therefore parallel for all plies having a fibre orientation angle defined as 0 degrees. The orientation of the lateral direction 22 for each ply is assumed to be perpendicular to the longitudinal direction. The positive directions for the material coordinate system orientation angle and the fibre orientation angle indicated in Figure 1 are determined from the righthand screw rule according to nodal connectivity order.

A flowchart of an embodiment of a method for generating a spatially varying random fibre orientation error over these elements is shown in Figure 2.

A key feature of the method and design tool embodying the method is the assignment of a fibre orientation angle error at an initial seed element within each ply of the laminate to represent the constant angle error over the laminate, and then propagating this error outward to all adjacent elements with the addition of a spatially varying angle error term. In this manner, the fibre orientation is randomly varied for each element of every ply by the method.

The individual steps of the method will now be described in detail, with steps 101 to 103 representing configuration of processing parameters, steps 106 to 108 representing processing of the constant angle error for each ply of each laminate, and steps 109 to 119 representing processing of the spatially varying, or variable, angle error for each ply. The tool and method may introduce either a constant error or a variable error or both using the iterative process.

The method may be applied to an existing design, but most likely it will be used during the development process of a new composite component or structure. Each component is represented by a mesh of thin shell elements referencing one or more laminated composite shell section properties. These laminate properties specify the thickness, material properties, fibre orientation angle and shape of each ply within a single component, the shape being defined as a subset of all elements comprising the laminate. Depending upon the FEA software and modelling approach used, the fibre orientation angle for all elements encompassed by a single ply can either be specified individually for each element, or else once on a single laminated composite shell section property referenced by all these elements.

The material properties of each ply within such a laminate are defined at macroscopic level assuming a plane stress orthotropic linear elastic stress-strain relationship. This behaviour assumes different material properties in two orthogonal in-plane directions, commonly termed the longitudinal direction and lateral direction, but ignores through thickness effects. This material model can be used to represent fibre-reinforced composite plies incorporating unidirectional or bidirectional (fabric) reinforcement, with the longitudinal direction corresponding to the fibre (or warp fibre for bidirectional materials) and the lateral direction corresponding to the matrix (or weft fibre for bidirectional materials).

When designing the component, the designer will usually be working to a brief and will try to use the least material to meet that brief. This keeps costs down for the finished component and also weight which is an increasingly important factor in many applications including automotive design.

Figure 4 shows a perspective view of a simple laminated composite component 50, in this case a variable thickness rectangular plate comprising four plies 51 to 54 numbered in stacking order. The orientation of the longitudinal fibre direction 21 for all elements are indicated, with the two outermost 'all-over' plies (51, 54) oriented along the longest dimension (length) of the plate and the two innermost 'local reinforcement' plies (52, 53) oriented across the shortest dimension (width). Note that each ply within the laminate is shown as a separate ply of shell elements for clarity, but in reality the complete laminate would be defined within the FEA model as a single ply of composite shell elements with the number of plies, laminate thickness and corresponding fibre orientations varying over the mesh.

To maintain continuity between all elements of a single ply, the invented method requires each ply within the laminate to be referenced by a unique 'global' ply identifier instead of a 'local' ply identifier. The reason for this will now be clarified using the rectangular plate example as shown in Figure 4. Using global ply identifiers, ply one and four both encompass all elements within the laminate, whilst ply two and three only encompass the right half of the laminate. The fibre orientation angle is therefore consistent across all elements of a global ply, since the global identifiers and corresponding elements contained within each ply reflect the operations followed during manufacture. When using local ply identifiers, the left half of the laminate is encompassed by ply one and two, whilst the right half of the laminate is encompassed by ply one, two, three and four. The fibre orientation angle is therefore inconsistent across all elements of a local ply, as can be seen with ply two which now encompasses all elements within the laminate.

Having designed the component it is then modelled using a proprietary finite element package, usually a computer program that will run on a suitable computer. The method could be implemented either as bespoke computer software written in a programming language such as C, or else performed within existing commercially available FEA pre-processing software using an internal scripting language. The preferred implementation would be a custom script executed within the ANSA pre-processing software developed by BETA CAE Systems S.A., which uses the Python programming language for its Application Programming Interface (API) and enables direct modification of a composite laminate.

Figure 5 shows a typical hardware realisation of an FEA system and design tool of the present invention. A user interface 301 is provided in the form of a display screen on which a graphical user interface is presented. The user may interact with the interface by touching the screen, where it has a touch screen capability, or more likely by making data input using a keyboard 302 or mouse 303 that also form part of the user interface. The screen, keyboard and mouse are connected to a processor 304 such as those produced by Intel Corporation, which runs a computer operating system stored in an area of electronic memory 305. The memory may additionally include program instructions 306 that cause the processor 304 to perform the functionality of the design tool.

In an alternative, the processor 304 may provide the function of a terminal with the program that provides the functionality of the design tool being stored remotely from the processor and the processor simply driving the display and receiving user inputs. The program may, for instance, be stored at a remote location and accessed over the worldwide web, rendering the user interface in a browser window displayed on the display screen.

The resulting FEA model will typically comprise a text file 307 which can be read by the FEA software. This may be stored in the memory, or externally on a memory device or at a location that can be accessed across the worldwide web.

In a first stage of assessing the integrity of the component 50, the FEA model contained within the computer readable data file is loaded to the design tool of the present invention during step 101. The user may at this stage define an appropriate continuous probability distribution to represent the constant fibre orientation angle error over each ply of the laminate at step 102. This probability distribution could either be uniform, where all values of the random variable occur with equal probability within upper and lower limits, or else normal (Gaussian), where random values occur with unequal probability based upon the standard deviation and mean (with 68%, 95% and 99.7% of all values lying within one, two or three standard deviations of the mean, respectively).

If a uniform distribution is chosen, the user may also be prompted to define suitable values for the upper limit and lower limit (specified in degrees) whereas, for a normal distribution, the user need only define a value for standard deviation (also specified in degrees) since the mean is assumed in this situation to be zero. At step 103 the user must then define a uniform or normal distribution probability distribution to represent the variable fibre orientation angle error gradient at each element within a ply (with limits being specified in degrees per mm or equivalent).

As shown in Figure 2, the next step carried out by the design tool is the level 1 (outermost) loop delimited by steps 104 and 121, which cycles through each laminate within the model until all laminates have been modified. The level 2 loop delimited by step 105 and 120 then cycles through each ply within the current laminate (selected at step 104) until all plies have been modified. Firstly, an initial seed element is either manually selected or randomly selected during step 106 from all elements within the current ply (selected at step 105). This initial seed element represents the point on the current ply at which the spatially varying fibre orientation angle error is assumed to be zero, such that only the constant fibre orientation angle error exists. A random number is then generated at step 107 to represent the constant fibre orientation angle error $E_C$ over the current ply using the corresponding probability distribution (defined at step 102). This random number is calculated using a pseudo-random number generator such as the widely used Mersenne Twister algorithm, which is available in most programming languages and numerical libraries. Finally, during step 108 the fibre orientation angle at the initial seed element (identified at step 106) is modified from its original value $\theta$ to a new value $\theta_n$ using the following equation:

$$\theta_n = \theta + E_c$$

The level 3 loop delimited by steps 109 and 119 cycles through all elements within the current ply, propagating outward from the initial seed element to any adjacent elements in a series of rings until all such rings of elements have been modified. The level 4 (innermost) loop delimited by steps 110 and 118 then cycles through each 'active' element within the current ring of elements (selected at step 109) until all these elements have been modified. Firstly, a list of all elements adjacent to the active element and having a previously modified fibre orientation angle is identified at step 111. Note that, on the first pass through the level 4 loop per ply, this list of elements will consist of just the initial seed element. One of these previously modified elements is then randomly selected at step 112 to be the new seed element, with a corresponding total angle error $E_S$ (as calculated during a previous loop). This new seed element represents the point on the ply from which the spatially varying fibre orientation angle error at the active element is propagated. Next, the distance $D_i$ between the centroid of the active element (selected at step 110) and the centroid of the seed element (selected at step 112) is calculated at step 113. A random number is then generated at step 114 to represent the variable fibre orientation angle error gradient $\dot{E}_i$ at the active element using the corresponding probability distribution (defined at step 103). The variable fibre orientation angle error $E_i$ at the active element is calculated at step 115 from the error gradient $\dot{E}_i$ (calculated at step 114) and the distance between centroids $D_i$ (calculated at step 113) using the following equation:

$$E_i = \dot{E}_i \times D_i$$

The total fibre orientation angle error $E$ at the active element is then calculated at step 116 from the variable angle error $E_i$ (calculated at step 115) and the seed element angle error $E_S$ (identified at step 112) using the following equation:

$$E = E_s + E_i$$

Finally, during step 117 the fibre orientation angle at the active element (identified at step 110) is modified from its original value $\theta$ to a new value $\theta_n$ using the following equation:

$$\theta_n = \theta + E$$

Once all laminates within the model have been modified, the modified FEA model is exported to a computer readable data file during step 122.

The composite component or structure represented by the modified FEA model may then be analysed using FEA software to quantify the variability in structural performance of the component due to imperfection. This variation in results could then be compared with structural performance targets to determine whether the design is robust to manufacturing imperfections in fibre orientation.

The computational method shown in Figure 2 could be repetitively applied to the same original FEA model as part of an external Monte Carlo simulation, where repeated random sampling of fibre orientation error and subsequent finite element analysis is performed on the same model to obtain a distribution of the unknown output variables (results).

Figure 3 shows a worked example of the computational method applied to a simple rectangular laminated composite plate having dimensions of 30mm width and 40mm height. This plate has been discretised into a mesh of quadrilateral shell elements having a constant element edge length (and thus distance between centroids) of 10mm. Although structural laminates would normally include two or more plies, only one ply having longitudinal fibres oriented at 45 degrees to the lower edge is considered for the purpose of this example. In this example, the constant angle error at the initial seed element was randomly generated using a uniform probability distribution within upper and lower limits of $\pm$10 degrees, whilst the variable angle error gradient at each subsequent element was randomly generated using a uniform probability distribution within upper and lower limits of $\pm$2 degrees per mm.

Separate diagrams are included within Figure 3 to show the successive calculations performed at each element as the angle error propagates outward from the initial seed element in diagram 3a to all adjacent elements in diagram 31. Diagram 3m shows the original orientation of the longitudinal fibre direction 21 at each element, which are defined as previously discussed by a fibre orientation angle 20 measured from the material coordinate system X axis 11 (shown only on the lower left element of Diagram 3m for clarity). The material coordinate system X axis for all elements is oriented parallel to the lower edge of the plate with the fibre orientation angle defined as 45 degrees. The current ring of elements (hatched), the seed element 6 (shaded) and active element 7 (outlined) are identified in diagrams 3a to 31, the active element being annotated with the corresponding values calculated for $D_i$, $\dot{E}_i$, $E_i$, $E_S$ and $E$. In the interest of brevity, the addition of the angle error to the original fibre orientation angle at each element is omitted from diagrams 3a to 31. Instead, diagram 3n shows the modified orientation of the longitudinal fibre direction 21 at each element after addition of the calculated angle error.

The skilled person will appreciate that the present invention provides a computational method for generating constant or spatially varying fibre orientation errors within laminated fibre-reinforced composite structures modelled using finite element analysis. This innovative method requires no manual definition of unique design variables corresponding to the fibre orientation angle error at each element of every ply within the laminate, reducing greatly the model preparation time required. The tool can be used to generate fibre orientation errors within a laminate incorporating continuous fibre-reinforced composite plies comprising unidirectional or bidirectional (fabric) reinforcement and may be used to generate fibre orientation errors within a laminate incorporating discontinuous fibre-reinforced composite plies comprising a reinforcement having a preferred orientation.

## Claims

**1.** A design tool for use in processing a finite element analysis model of a fibre reinforced composite component, the tool comprising
Receiving means for receiving a finite element model of the composite component, the model representing at least one laminate of the component comprising at least one ply of fibre reinforced composite material as a set of shell elements, whereby for each shell element the model includes a fibre orientation angle value indicative of the angle of at least one fibre passing through the element, and
Modifying means for modifying the model to produce an updated model in which the fibre orientation angle value for each element is modified by at least one of a spatially constant amount and a spatially varying amount generated according to a set of predefined parameters, by an iterative process in which the modification for an element is made with reference to the modified fibre orientation angle value for at least one adjacent element.

**2.** A tool according to claim 1 configured to generate the fibre orientation angle value for the elements by propagation from an initial seed element selected from the elements of the model.

**3.** A tool according to claim 1 or claim 2 that includes a user interface that enables a user to control the values of the predefined parameters used in the iterative process.

**4.** A tool according to any preceding claim in which the user interface enables the user to enter or modify the defined parameters including defining a uniform or normal (Gaussian) continuous probability distribution to represent the spatially constant fibre orientation angle error over each ply of the laminate.

**5.** A tool according to any preceding claim in which the user interface enables the user to enter or modify the defined parameters including defining a uniform or normal (Gaussian) continuous probability distribution to represent the spatially varying fibre orientation angle error (or spatially varying fibre orientation angle error gradient) over each ply of the laminate, and may also apply a set of rules governing the way in which the tool varies the angle spatially across the plies.

**6.** A tool according to any preceding claim in which the user interface enables the user to set parameters that cause the tool, when applying the iterative process, to apply a uniform distribution, where all values of the random variable occur with equal probability within defined upper and lower limits, or a normal (Gaussian) distribution, where random values occur with unequal probability based upon the defined standard deviation and mean.

**7.** A tool according to any preceding claim that is arranged, following the setting of the defined parameters, to determine the total fibre orientation angle error value for each element in at least one ply by combining the fibre orientation angle error value of an adjacent element with a randomly determined fibre orientation angular error value, the randomly determined error being constrained by the defined parameters.

**8.** A tool according to any preceding claim that in use propagates the values across the model by calculating values for each element in a ring of elements around an initial seed element within a ply and subsequently repeating for all adjacent rings in that ply in the model, randomly selecting a new seed element from the previous ring of elements from which the orientation error will be propagated, before repeating for the other plies.

**9.** A tool according to any preceding claim that includes means for enabling a user to select the initial seed element, or alternatively the seed element within at least one ply may be randomly selected by the tool or pseudo randomly selected.

**10.** A tool according to any preceding claim that includes a means for applying a finite element analysis process to the modified model to determine the structural performance of the composite component.

**11.** A method of processing a finite element analysis model of a composite component of the kind comprising at least one ply of fibre reinforced composite material, the method comprising the steps of:

receiving a finite element model of the composite component, the model representing a laminate of the component comprising at least one ply of fibre reinforced composite material as a set of shell elements, whereby for each shell element the model includes a fibre orientation angle value indicative of the angle of at least one fibre passing through the element,
modifying the model to produce an updated model in which the fibre orientation angle value assigned to each shell is modified by a random amount according to a set of defined parameters by an interactive process in which the modification is made with reference to the modified fibre orientation angle value for at least one adjacent element by propagation from an initial seed element.

**12.** A method according to claim 11 which further comprises applying a finite element analysis process to the modified model to determine the structural performance of the composite component.

**13.** A method according to claim 11 of claim 12 which further comprises a step of receiving from a user the defined parameters or otherwise enabling a user to modify or place boundaries on the defined parameters.

**14.** A method according to claim 11, 12 or claim 13 in which the parameters include a constant offset angular error and/or a randomly generated spatially constant fibre orientation angle error and/or other randomly generated spatially varying fibre orientation angle error.

**15.** A method according to any one of claims 11 to 14 in which the parameters include a continuous probability distribution to represent the constant fibre orientation angle error over each ply of the laminate and the spatially varying fibre orientation angle error (or spatially varying fibre orientation angle error gradient).

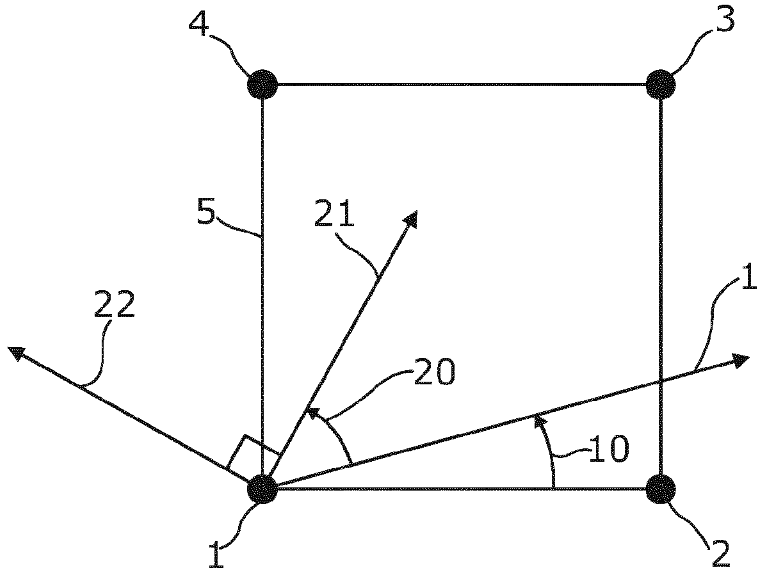


Figure 1

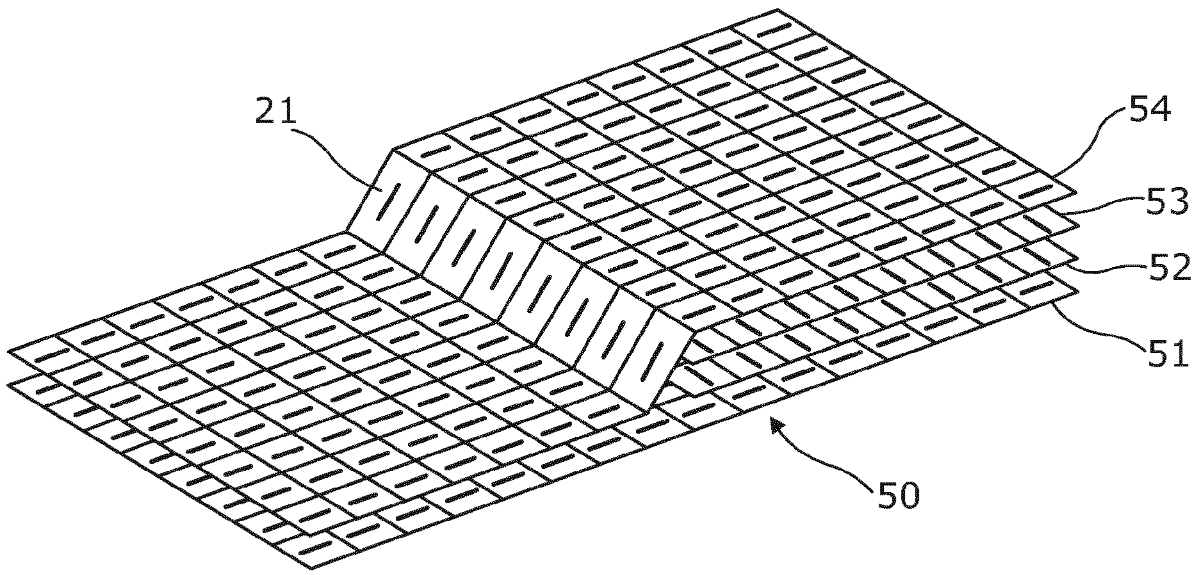


Figure 4

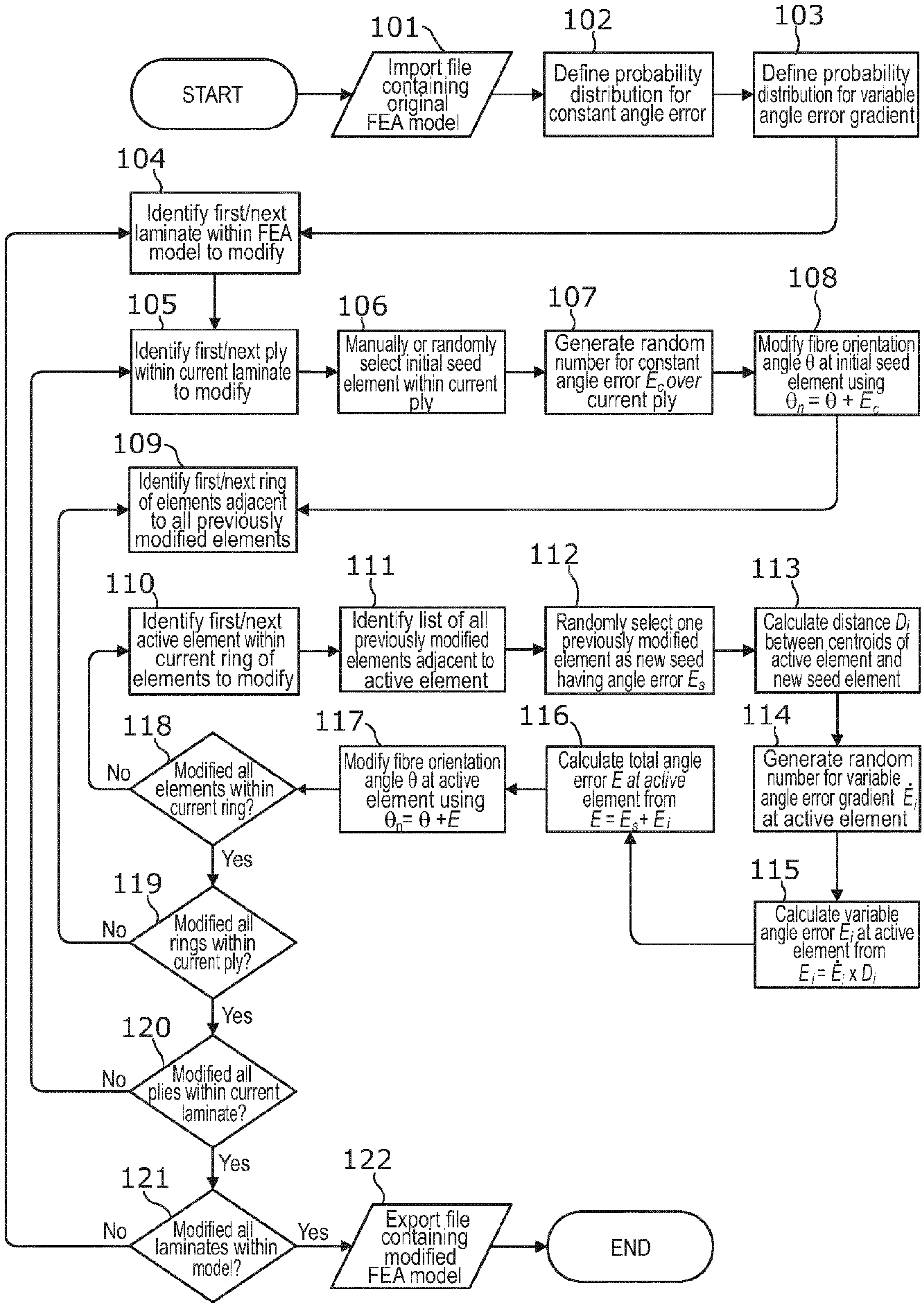

START
101 Import file containing original FEA model
102 Define probability distribution for constant angle error
103 Define probability distribution for variable angle error gradient
104 Identify first/next laminate within FEA model to modify
105 Identify first/next ply within current laminate to modify
106 Manually or randomly select initial seed element within current ply
107 Generate random number for constant angle error $E_c$ over current ply
108 Modify fibre orientation angle θ at initial seed element using $\theta_n = \theta + E_c$
109 Identify first/next ring of elements adjacent to all previously modified elements
110 Identify first/next active element within current ring of elements to modify
111 Identify list of all previously modified elements adjacent to active element
112 Randomly select one previously modified element as new seed having angle error $E_s$
113 Calculate distance $D_i$ between centroids of active element and new seed element
114 Generate random number for variable angle error gradient $\dot{E}_i$ at active element
115 Calculate variable angle error $E_i$ at active element from $E_i = \dot{E}_i \times D_i$
116 Calculate total angle error $E$ at active element from $E = E_s + E_i$
117 Modify fibre orientation angle θ at active element using $\theta_n = \theta + E$
118 Modified all elements within current ring?
No
Yes
119 Modified all rings within current ply?
No
Yes
120 Modified all plies within current laminate?
No
Yes
121 Modified all laminates within model?
No
Yes
122 Export file containing modified FEA model
END


Figure 2

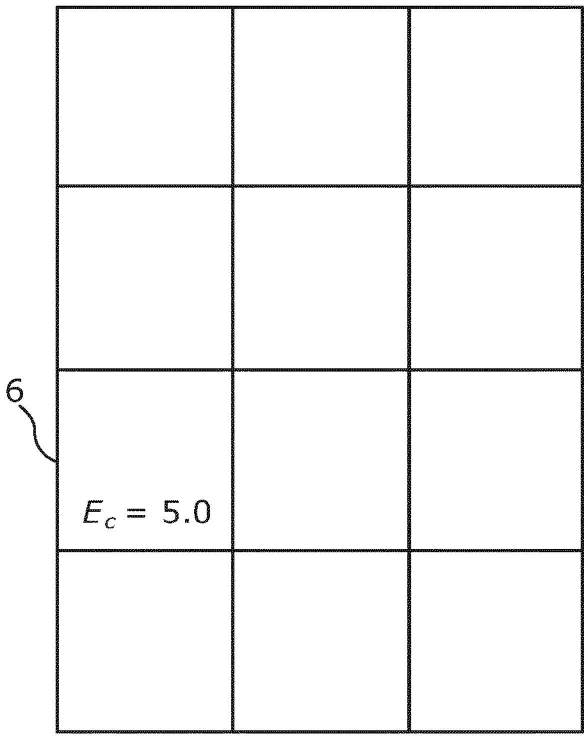


Figure 3a

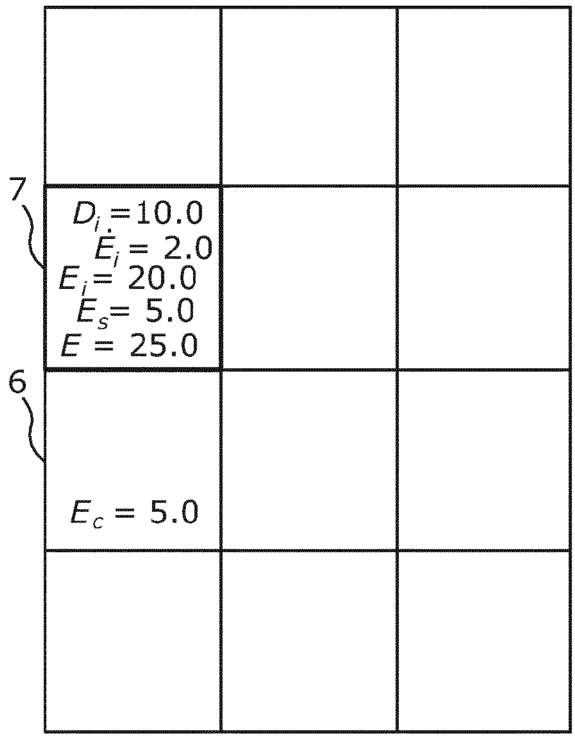


Figure 3b

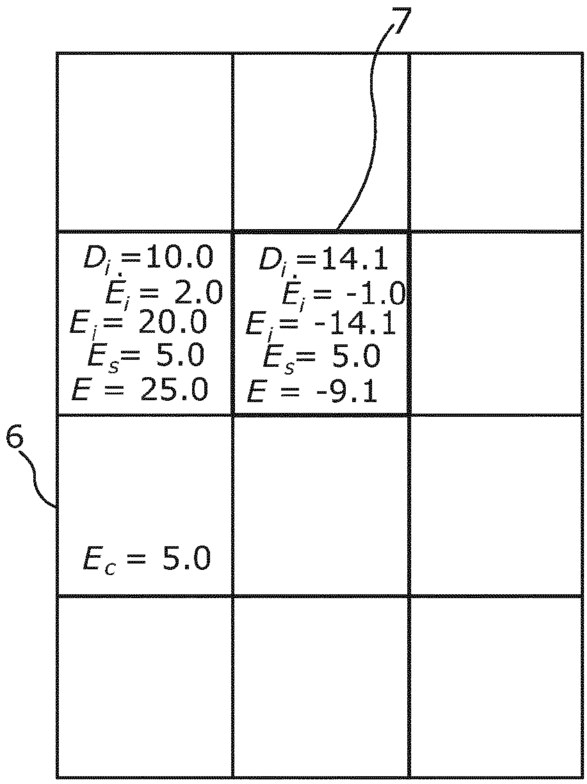


Figure 3c

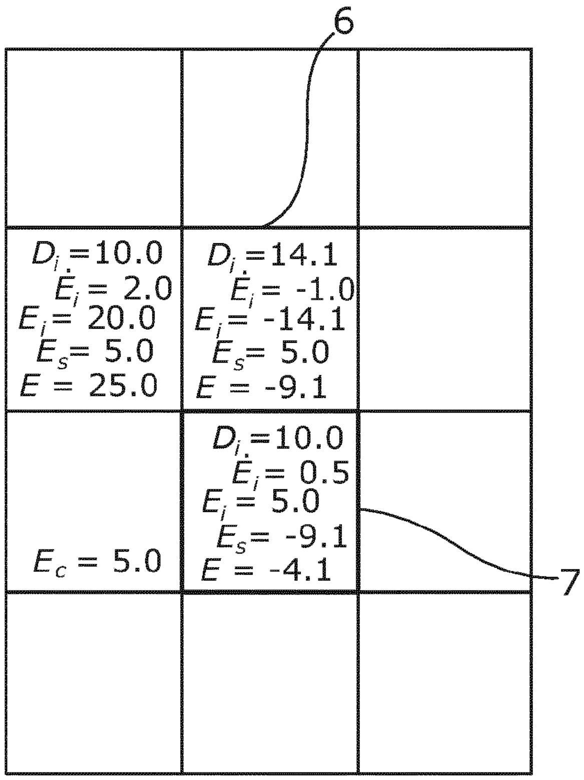


Figure 3d

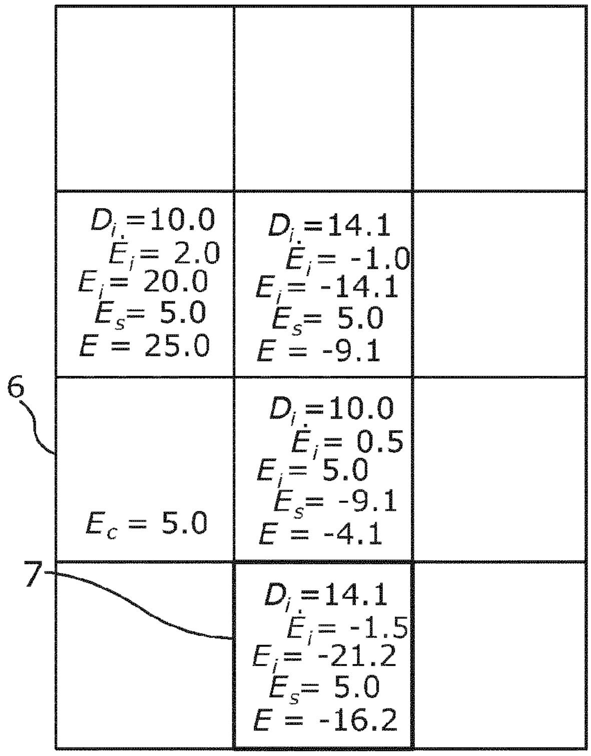


Figure 3e

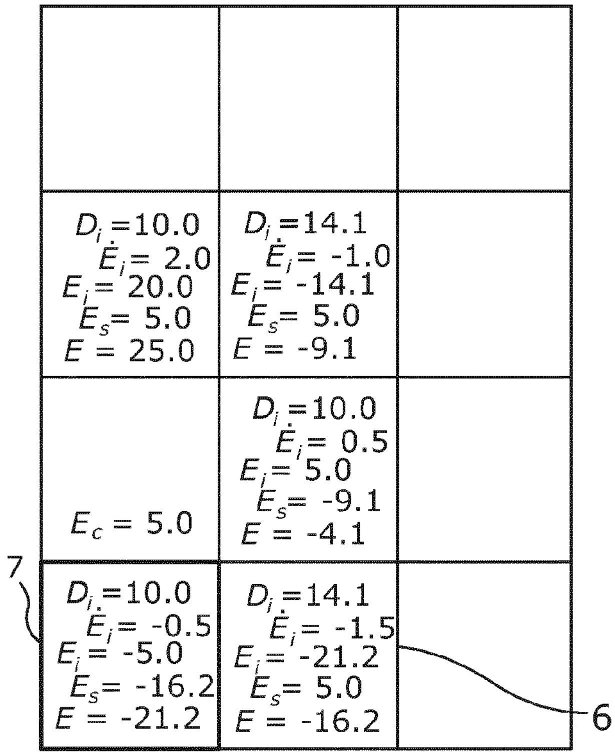


Figure 3f

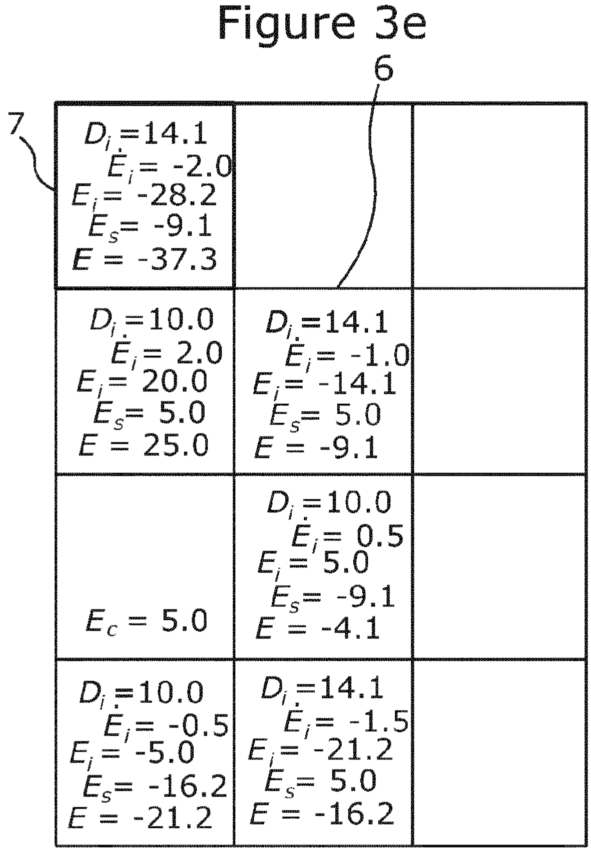


Figure 3g

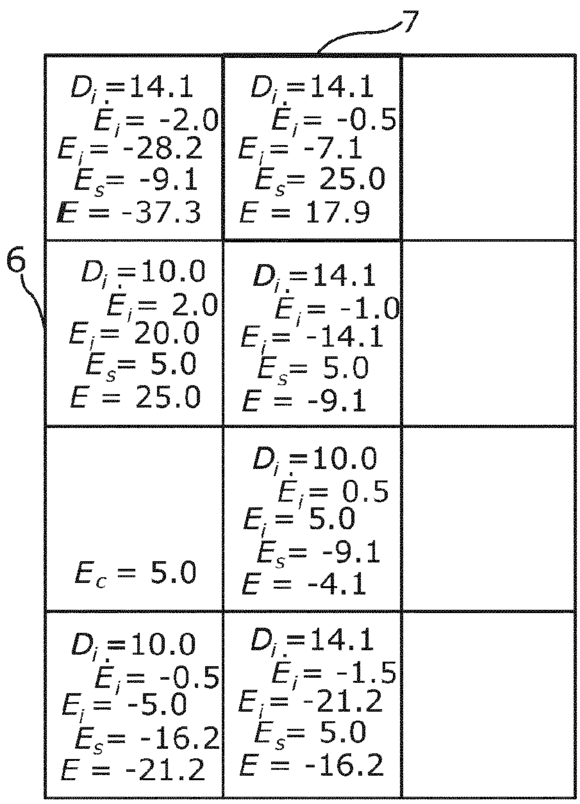


Figure 3h

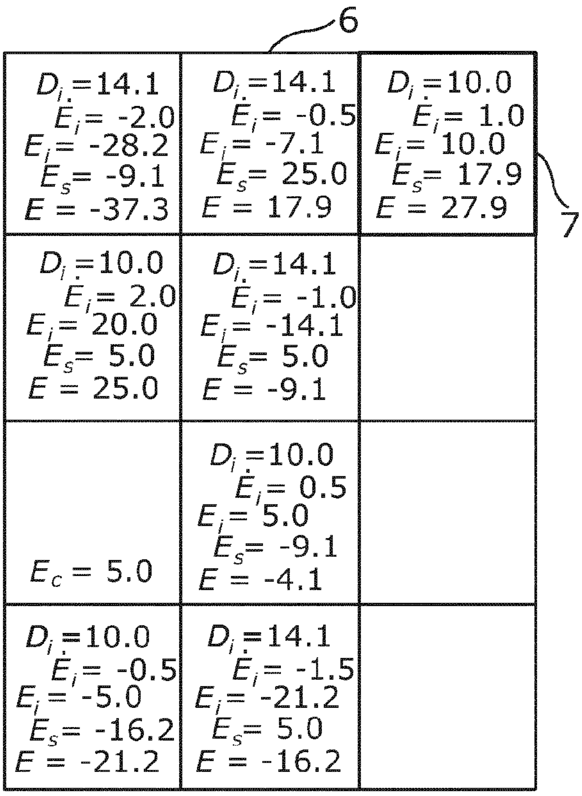


Figure 3i

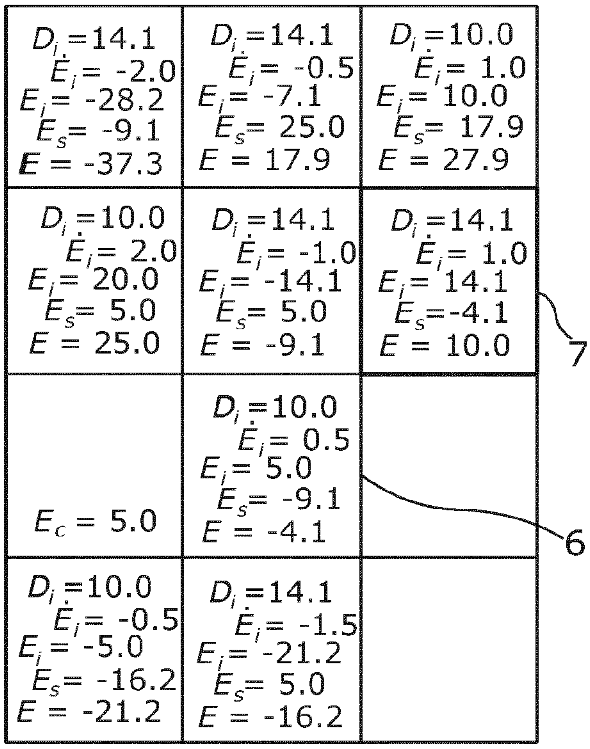


Figure 3j

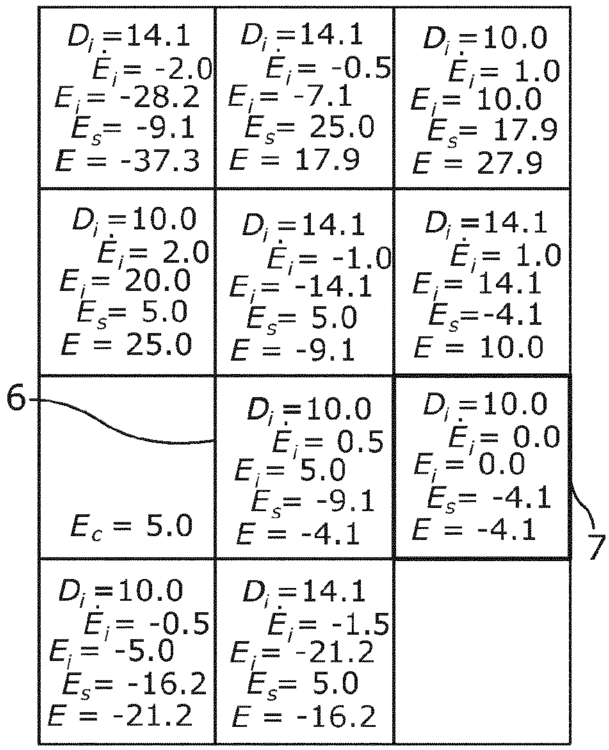


Figure 3k

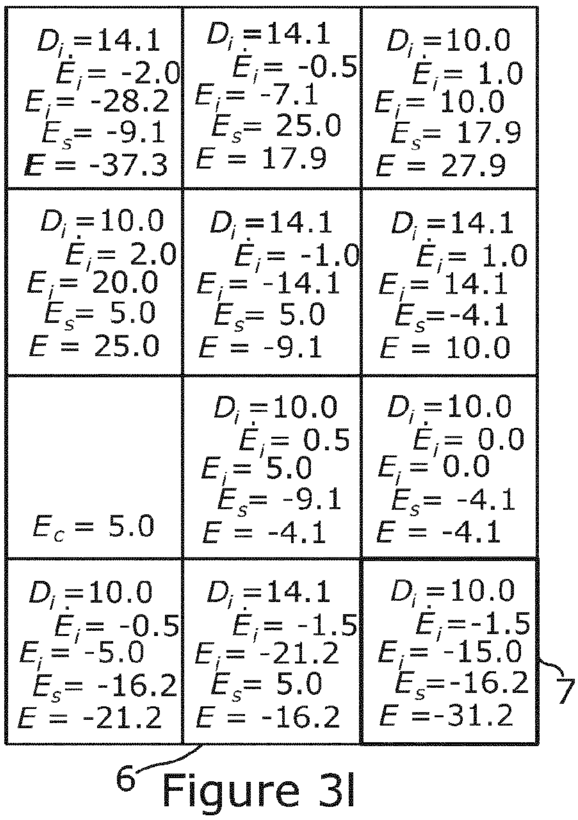


Figure 3l

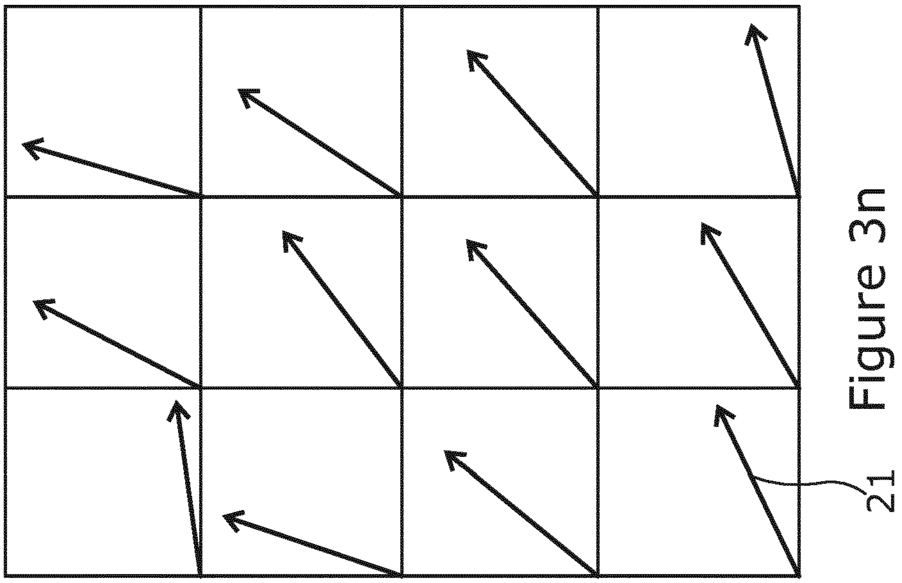


Figure 3n

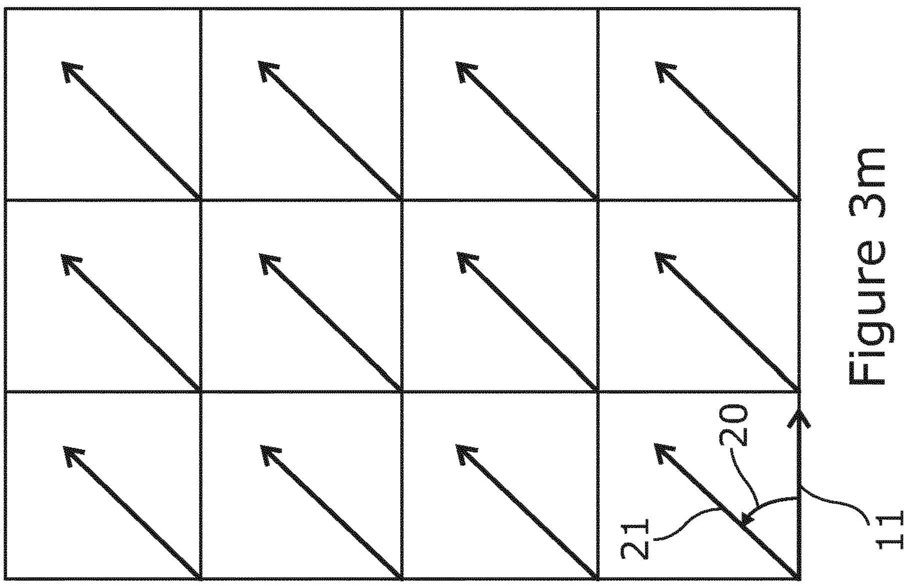


Figure 3m

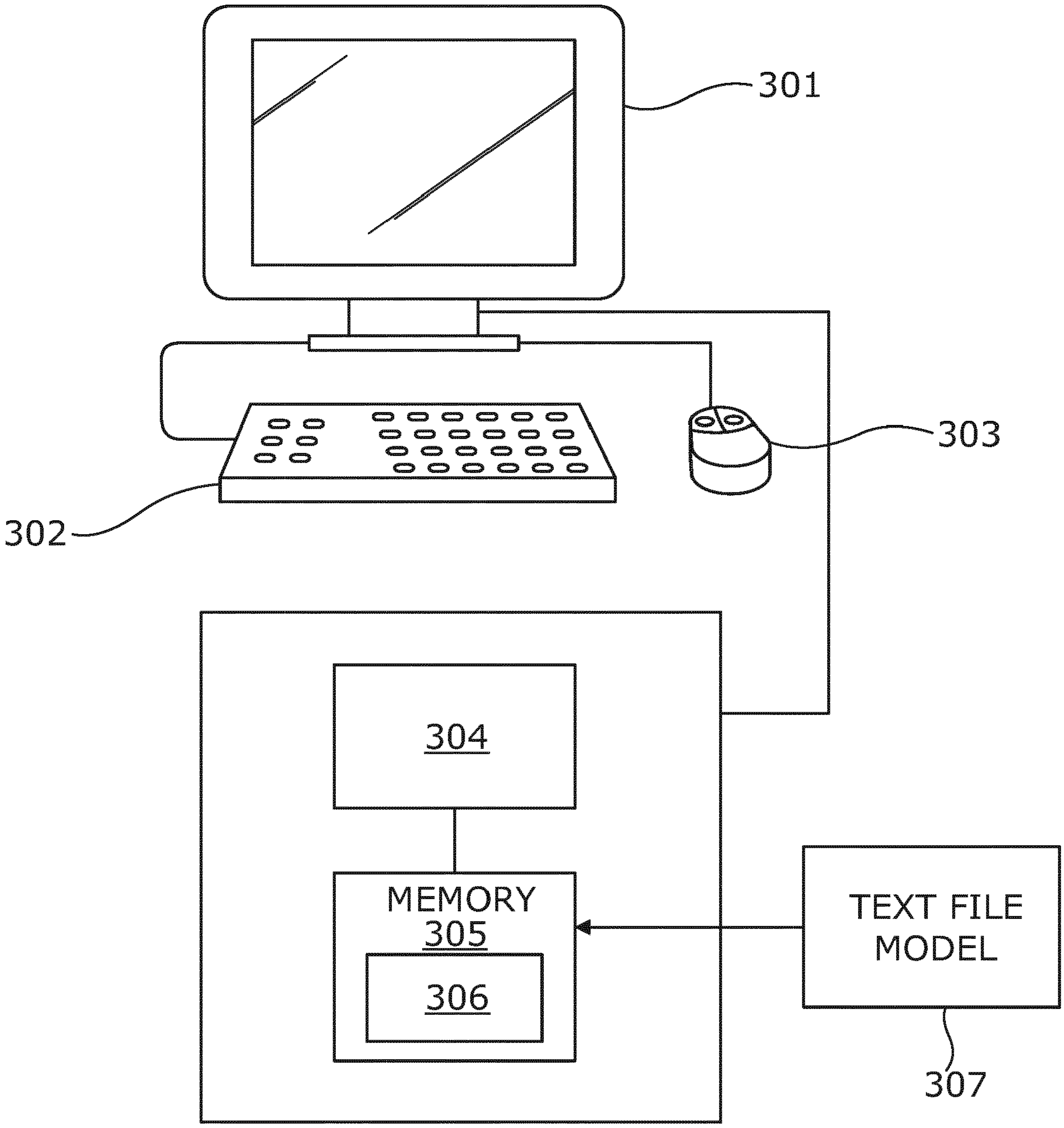


Figure 5